(19) Europäisches Patentamt
European Patent Office
Office européen des brevets

(11) Veröffentlichungsnummer: **0 176 480**
**A1**

(12) **EUROPÄISCHE PATENTANMELDUNG**

(21) Anmeldenummer: 85810417.7

(22) Anmeldetag: 13.09.85

(51) Int. Cl.[4]: C 07 F 9/18
C 08 K 5/51, C 09 K 15/32

(30) Priorität: 19.09.84 US 651974

(43) Veröffentlichungstag der Anmeldung: 02.04.86 Patentblatt 86/14

(84) Benannte Vertragsstaaten: DE FR GB IT

(71) Anmelder: CIBA-GEIGY AG
Klybeckstrasse 141
CH-4002 Basel(CH)

(72) Erfinder: Spivack, John D.
1 Blue Jay Street
Spring Valley New York 10977(US)

(72) Erfinder: Steinhuebel, Leander P.
218 Glen Avenue
Portchester, NY 10573(US)

(54) **Substituierte S-(Hydroxyphenyl)-thiophosphate.**

(57) Verbindungen der Formel I

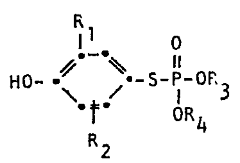

(I),

worin $R_1$ und $R_2$ z.B. $C_1$-$C_{12}$ Alkyl, $C_5$-$C_6$ Cycloalkyl, Phenyl oder $C_7$-$C_9$ Aralkyl bedeuten und $R_3$ und $R_4$ z.B. Wasserstoff, $C_1$-$C_{20}$ Alkyl, $C_5$-$C_6$ Cycloalkyl oder Phenyl sind, eignen sich als Stabilisatoren für organisches Material.

EP 0 176 480 A1

CIBA-GEIGY AG
Basel (Schweiz)

3-15073/-/CGC 1093

Substituierte S-(Hydroxyphenyl)-thiophosphate

Die vorliegende Erfindung betrifft neue S-(Hydroxyphenyl)-thiophosphate und deren Verwendung als Stabilisatoren für organisches Material.

Die biologische Aktivität von S-Phenyl-thiophosphaten ist seit langem bekannt. In Bochu-Kagaku 40(3), 110-117 (1975) wird zum Beispiel die fungizide Wirkung von S-(p-Hydroxyphenyl)-O,O-diethyl-thiophosphat beschrieben und die Herstellung von S-Phenyl-O,O-diethyl-thiophosphat wird in JACS 77, 181-182 (1955) erwähnt.

Ueberraschenderweise ist jetzt gefunden worden, dass die S-(4-Hydroxyphenyl)-thiophosphate dieser Erfindung besonders effektive Stabilisatoren für organisches Material sind.

Organische polymere Materialien wie Kunststoffe und Harze, Schmier- und Mineralöle unterliegen thermischem, oxidativem und lichtinduziertem Abbau. In der Technik ist eine grosse Anzahl von Stabilisatoren für eine Vielzahl von Substraten bekannt. Die Wirksamkeit eines Stabilisators hängt unter anderem von der Art des Substrats, in welchem er eingesetzt wird und vom jeweiligen Abbaumechanismus ab. Daher ist es im allgemeinen schwierig, für eine konkrete Anwendung den wirksamsten und ökonomischsten Stabilisator anzugeben.

So kann beispielsweise die Wirksamkeit eines Stabilisators, der die Flüchtigkeit einer Verbindung reduziert, darauf zurückgeführt werden, dasser einen Bindungsbruch der Substratmoleküle verhindert. Um eine geringe Versprödung oder die Erhaltung der Elastizität eines Polymeren oder eines Elastomeren zu gewährleisten, kann von einem Stabilisator

verlangt werden, dass er übermässige Vernetzungsreaktionen und/oder Kettenbruch verhindert. Um die Vergilbung zu unterbinden, müssen Reaktionen, die zu neuen Chromophoren führen, verhindert werden. Weiterhin müssen Probleme der Verarbeitungsstabilität und der Substratverträglichkeit beachtet werden.

Die erfindungsgemässen Verbindungen erweisen sich als besonders nützliche Stabilisatoren für Polyolefine, schlagfestes Polystyrol, Elastomere wie Polybutadien oder Styrol-Butadien-Elastomere und andere Elastomere, bei denen der Erhalt der Elastizität und die Verhinderung von Vernetzungsreaktionen, Versprödung, Verfärbung und Geruchsbildung, sowie eine Verhinderung des Ausschwitzens eine grundlegende Qualitätsanforderung darstellen.

Die vorliegende Erfindung betrifft Verbindungen der Formel I

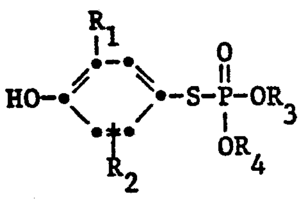

(I),

worin $R_1$ und $R_2$ unabhängig voneinander $C_1$-$C_{12}$ Alkyl, $C_5$-$C_6$ Cycloalkyl, unsubstituiertes oder durch $C_1$-$C_{12}$ Alkyl substituiertes Phenyl, unsubstituiertes oder durch $C_1$-$C_{12}$ Alkyl substituiertes $C_7$-$C_9$ Aralkyl sind und $R_1$ zusätzlich Wasserstoff bedeutet, $R_3$ und $R_4$ unabhängig voneinander Wasserstoff, $C_1$-$C_{20}$ Alkyl, $C_5$-$C_6$ Cycloalkyl, unsubstituiertes oder durch $C_1$-$C_{12}$ Alkyl substituiertes Phenyl bedeuten.

Von Interesse sind Verbindungen, worin $R_1$ $C_1$-$C_{12}$ Alkyl, $C_5$-$C_6$ Cycloalkyl, unsubstituiertes oder durch $C_1$-$C_{12}$ Alkyl substituiertes Phenyl, unsubstituiertes oder durch $C_1$-$C_{12}$ Alkyl substituiertes $C_7$-$C_9$ Aralkyl bedeutet.

Bevorzugt sind Verbindungen der Formel (I), in denen sich $R_1$ und $R_2$ in ortho-Stellung zu der Hydroxylgruppe befinden.

Als $C_1$-$C_{12}$ Alkyl bedeuten $R_1$ und $R_2$ geradkettiges oder verzweigtes Alkyl, bevorzugt $C_1$-$C_8$ Alkyl, wie z.B. Methyl, n-Butyl, sek.-Butyl, tert.-Butyl, tert.-Pentyl, Hexyl, 2-Ethylhexyl, n-Octyl und 1,1,3,3-Tetramethylbutyl. Methyl und tert.-Butyl sind besonders bevorzugt.

Als $C_1$-$C_{20}$ Alkyl besitzen $R_3$ und $R_4$ beispielsweise die in dem vorangehenden Abschnitt für Alkyl angegebenen Bedeutungen und zusätzlich können $R_3$ und $R_4$ auch Decyl, Dodecyl, Hexadecyl und Octadecyl bedeuten. Bevorzugt bedeuten $R_3$ und $R_4$ $C_4$-$C_{18}$ Alkyl.

Als Aralkyl bedeuten $R_1$ und $R_2$ bevorzugt Benzyl, α-Methylbenzyl oder α,α-Dimethylbenzyl.

Substituiertes Phenyl bedeutet z.B. Tolyl, Mesityl oder Xylyl.

Bevorzugt sind Verbindungen der Formel (I), worin $R_1$ tert.-Butyl ist, $R_2$ Methyl oder tert.-Butyl bedeutet und $R_3$ und $R_4$ Decyl, Dodecyl oder Phenyl bedeuten.

Von Interesse sind Verbindungen der Formel (I), worin $R_1$ tert.-Butyl ist und $R_2$ Methyl ist.

Beispiele für Verbindungen der Formel (I) sind:

S-(3,5-Dimethyl-4-hydroxyphenyl)-O,O-di-2-ethylhexyl-thiophosphat

S-(3,5-Dimethyl-4-hydroxyphenyl)-O,O-didodecyl-thiophosphat

S-(3,5-Dimethyl-4-hydroxyphenyl)-O,O-dioctadecyl-thiophosphat

S-(3,6-Dimethyl-4-hydroxyphenyl)-O,O-di-p-(tert.-butyl)-phenyl-thiophosphat

S-(3-Methyl-4-hydroxy-5-(tert.-butyl)phenyl)-O,O-di-p-dodecylphenyl-thiophosphat

S-(3,5-Di-(tert.-butyl)-4-hydroxyphenyl)-O,O-di-p-(1,1,3,3-tetramethylbutyl)phenyl-thiophosphat
S-(3-Methyl-4-hydroxyl-5-cyclohexylphenyl)-O,O-dioctadecyl-thiophosphat
S-(3,5-Dicyclohexyl-4-hydroxyphenyl)-O,O-didodecyl-thiophosphat
S-(3,5-Dicyclohexyl-4-hydroxyphenyl)-O,O-dioctadecyl-thiophosphat
S-(3-Methyl-4-hydroxy-5-cyclohexylphenyl)-O,O-didodecyl-thiophosphat
S-(3-tert.-Butyl)-4-hydroxy-6-methylphenyl)-O,O-didodecyl-thiophosphat.

Die erfindungsgemässen Verbindungen können durch Umsetzung eines entsprechend substituierten Hydroxyphenylsulfenylchlorids mit einem geeigneten di- oder trisubstituierten Phosphit hergestellt werden. Das Sulfenylchlorid kann man unabhängig durch die Reaktion des Disulfids mit Chlorgas, Chlor, Sulfurylchlorid oder ähnlichem erhalten oder durch die Reaktion eines geeigneten Mercaptophenols mit N-Chlorsuccinimid. Das Sulfenylchlorid kann ebenfalls in situ ohne Isolierung hergestellt werden, indem zuerst das Disulfid mit Chlor umgesetzt wird und dann das trisubstituierte Phosphit mit dem Sulfenylchlorid reagiert.

Die verschiedenen Synthesen werden in chlorierten Lösungsmitteln wie Methylendichlorid, Perchlorethylen, Tetrachlorkohlenstoff; in aromatischen Lösungsmitteln wie Toluol, Xylol, Mesitylen, in halogenierten Kohlenwasserstoffen einschliesslich chloriertem Benzol wie z.B. 1,4- und 1,2,4,5-substituiertem Benzol oder in ähnlichen Lösungsmitteln durchgeführt. Die Temperatur der Startreaktion liegt im allgemeinen zwischen -30°C und 0°C, während beim zweiten Reaktionsschritt der Temperaturbereich -25° bis 25°C ist.

Die verschiedenen Ausgangsstoffe sind im Handel erhältliche Produkte oder können nach bekannten Methoden hergestellt werden.

Die erfindungsgemässen Verbindungen lassen sich als effektive Stabilisatoren für organisches Material wie Kunststoffe, Polymere oder

Harze einsetzen. Sie lassen sich auch als Stabilisatoren in Mineralölen oder synthetischen Oelen wie Schmieröle, Zirkulationsöle usw. verwenden.

Die Erfindung betrifft daher auch eine Stoffzusammensetzung enthaltend organisches Material und als Stabilisator mindestens eine Verbindung der Formel (I), worin $R_2$ zusätzlich Wasserstoff bedeuten kann. Als organisches Material wird ein synthetisches Polymer bevorzugt.

Vorzugsweise verwendet man die erfindungsgemässen Verbindungen als Stabilisatoren für Polyolefine wie beispielsweise Polyethylen oder Polypropylen; Polystyrol, vorzugsweise schlagfestes Polystyrol; ABS Harz; Elastomere wie beispielsweise Polybutadien, EPM, EPDM, SBR und Nitril-Kautschuk.

Polymere, die mit den erfindungsgemässen Verbindungen stabilisiert werden können, sind beispielsweise:

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.

2. Mischungen der unter 1) genannten Polymeren, z.B. Mischungen von Polypropylen mit Polyisobutylen.

3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

4. Polystyrol, Poly-(p-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Maleinanhydrid, Styrol-Acrylnitril-Methylacrylat; Mischungen von hoher Schlagzähigkeit aus Styrol-Copolymeren und einem anderen Polymer wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, wie z.B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS, MBS, ASA oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.

8. Polymere, die sich von α,ß-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere wie z.B. Ethylenoxid enthalten.

13. Polyphenyloxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylen-isophthalamid, sowie deren Block-Copolymere mit Polyethern wie z.B. mit Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten, oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren wie z.B. PP/EPDM, Polyamid 6/EPDM oder ABS, PVC/EVA, PVC/ABS, PVC/MBS, PC/ABS, PBTP/ABS.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellithate), sowie Abmischungen synthetischer Ester mit Mineralölen in beliebigen Gewichtsverhältnissen, wie sie z.B. als Spinnpräparationen Anwendung finden, sowie deren wässrigen Emulsionen.

29. Wässrige Emulsionen natürlicher oder synthetischer Kautschuke, wie z.B. Naturkautschuk-Latex oder Latices von carboxylierten Styrol-Butadien-Copolymeren.

Die erfindungsgemässen Stabilisatoren werden den Kunststoffen von 0,01 bis 5 Gew.-%, bezogen auf das stabilisierte Material, zugemischt. Je nach Verwendung und Substrat wird die Stabilisatormenge variiert. Bevorzugt verwendet man 0,05 bis 2 Gew.-% des Stabilisators, besonders bevorzugt 0,1 bis 1 Gew.-%.

Die Einarbeitung der Stabilisatorsubstanzen in die organischen Polymeren erfolgt nach bekannten Verfahren. Die Zudosierung kann während jeder Verarbeitungsstufe vor der Formgebung erfolgen. So kann beispielsweise der Stabilisator mit den pulverförmigen Polymeren gemischt

werden, oder eine Emulsion oder eine Suspension des Stabilisators kann mit einer Lösung, Suspension oder Emulsion des Polymeren vermischt werden.

Die stabilisierten Polymerzusammensetzungen der Erfindung können wahlweise auch verschiedene herkömmliche Additive enthalten, wie beispielsweise:

## 1. Antioxidantien

### 1.1. Alkylierte Monophenole

2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

### 1.2. Alkylierte Hydrochinone

2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

### 1.3. Hydroxylierte Thiodiphenylether

2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

1.4. Alkyliden-Bisphenole

2,2'-Methylen-bis-(6-tert.butyl-4-methylphenol)
2,2'-Methylen-bis-(6-tert.butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Ethyliden-bis-(4,6-di-tert.butylphenol)
2,2'-Ethyliden-bis-(6-tert.butyl-4-isobutylphenol)
2,2'-Methylen-bis-[6-(α-methylbenzyl)-4-nonylphenol]
2,2'-Methlyen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercapto-butan
Ethylenglycol-bis-[3,3-bis-(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methyl-benzyl)-6-tert.butyl-4-methyl-phenyl]-terephthalat.

1.5 Benzylverbindungen

1,3,5-Tri-(3,5-di-tert.butyl-4-hydroxybenzyl)-2,4,6-trimethylbenzol
Di-(3,5-di-tert.butyl-4-hydroxybenzyl)-sulfid
3,5-di-tert.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-phosphonsäure-dioctadecylester
3,5-Di-tert.butyl-4-hydroxybenzyl-phosphonsäure-monoethylester, Calcium-salz.

1.6. Acylaminophenole

4-Hydroxy-laurinsäureanilid
4-Hydroxy-stearinsäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester.

1.7. Ester der ß-(3,5-Di-tert.butyl-4-hydroxyphenyl)-propionsäure mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.8. Ester der ß-(5-tert.butyl-4-hydroxy-3-methylphenyl)-propionsäure mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.9. Amide der ß-(3,5-Di-tert.butyl-4-hydroxyphenyl)-propionsäure, wie z.B.

N,N'-Di-(3,5-di-tert.butyl-4-hydroxyphenylpropionyl)-hexamethylendiamin
N,N'-Di-(3,5-di-tert.butyl-4-hydroxyphenylpropionyl)-trimethylendiamin
N,N'-Di-(3,5-di-tert.butyl-4-hydroxyphenylpropionyl)-hydrazin

2. UV-Absorber und Lichtschutzmittel

2.1. 2-(2'-Hydroxyphenyl)-benztriazole, wie z.B. das 5'-Methyl-, 3',5'-Di-tert.butyl-, 5'-Tert.butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-Tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-ß,ß-diphenylacrylsäure-ethylester bzw. -isooctylester, α-Carbomethoxy-zimtsäuremethylester, α-Cyano-ß-methyl-p-methoxy-zimtsäuremethylester bzw. -butylester, α-Carbomethoxy-p-methoxy-zimtsäure-methylester, N-(ß-Carbomethoxy-ß-cyanovinyl)-2-methyl-indolin,

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern wie vom Methyl- oder Ethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethylpiperidyl)-sebacat
Bis-(1,2,2,6,6-pentamethylpiperidyl)-sebacat
n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin,
Tris-(2,2,6,6-tetramethyl-4-piperidyl)-nitrilotriacetat,
Tetrakis-(2,2,6,6-tetramethyl-4-piperidyl)-1,2,3,4-butantetracarbonsäure,
1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von ortho-und para-Methoxy- sowie von o- und p-Ethoxy-di-substituierte Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy-2,4,8,10-tetraoxa-3,9-diphosphaspiro[5.5]undecan.

5. Peroxidzerstörende Verbindungen, wie z.B. Ester der ß-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(ß-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Die folgenden Beispiele erläutern die Erfindung. Alle Mengenangaben entsprechen Gewichtsteilen, soweit nicht anders angegeben.

Beispiel 1: Dieses Beispiel erläutert verschiedene Methoden zur Herstellung von 3,5-Di-(tert.-butyl)-4-hydroxyphenylsulfenylchlorid (Zwischenprodukt).

Methode A: Eine Lösung von 9,5 g 3,5-Di-(tert.-butyl)-4-hydroxyphenyldisulfid in 60 ml Tetrachlorkohlenstoff wird bei -2°C tropfenweise zu 2,7 g Sulfurylchlorid gegeben. Die Reaktionsmischung wird 30 Minuten bei 5°C und anschliessend über Nacht bei Raumtemperatur gerührt. Die flüchtigen Bestandteile werden im Vakuum entfernt und man erhält 10,8 g einer orange-roten Flüssigkeit.
Elementaranalyse:
Berechnet für $C_{14}H_{21}ClOS$: S, 11,8.
Gefunden : S, 12,4.

Methode B: Eine Lösung von 18,96 g 3,5-Di-(tert.-butyl)-4-hydroxyphenyldisulfid in 50 ml Toluol wird bei -10°C mit 3,46 g Chlorgas behandelt. Die Reaktionsmischung wird 3 Stunden bei -20°C gerührt. Man entfernt das Lösungsmittel im Vakuum und erhält eine orange-rote Flüssigkeit.
Elementaranalyse:
Berechnet für $C_{14}H_{21}ClOS$: Cl, 12,98.
Gefunden : Cl, 12,20.

Methode C: Eine Mischung von 6,68 g N-Chlorsuccinimid in 100 ml Tetrachlorkohlenstoff wird bei 5°C tropfenweise zu einer Lösung von 11,92 g 2,6-Di-(tert.-butyl)-4-mercaptophenol in 100 ml Tetrachlorkohlenstoff gegeben. Die Reaktionsmischung wird bei Raumtemperatur 5 Stunden gerührt. Die Suspension des Succinimids wird filtriert und man erhält eine orange-rote Lösung des Sulfenylchlorids.

Beispiel 2: S-(3,5-Di-(tert.-butyl)-4-hydroxyphenyl)-O,O-diethyl-thiophosphat

Eine Lösung von 18,96 g 3,5-Di-(tert.-butyl)-4-hydroxyphenyldisulfid in Toluol wird bei -10°C mit 3,46 g Chlorgas behandelt. Die Reaktionsmischung wird eine Stunde bei -20°C gerührt. Anschliessend wird sie bei -25°C zu 13,28 g Triethylphosphit gegeben. Die Reaktionsmischung wird über Nacht bei Raumtemperatur gerührt. Die flüchtigen Bestandteile werden im Vakuum entfernt. Der Rückstand wird aus Toluol umkristallisiert und man erhält 14,8 g weisse Kristalle. Der Schmelzpunkt beträgt 155-157°C.

Elementaranalyse:

Berechnet für $C_{18}H_{31}O_4PS$: C, 57,7; H 8,3.

Gefunden : C, 58,0; H 7,9.

Beispiel 3: S-(3,5-Di-(tert.-butyl)-4-hydroxyphenyl)-O,O-dibutyl-thiophosphat

Die Herstellung erfolgt nach dem im Beispiel 2 beschriebenen Verfahren. Es werden 18,96 g 3,5-Di-(tert.-butyl)-4-hydroxyphenyldisulfid, 3,64 g Chlor und 22,00 g Tri-n-butyl-phosphit eingesetzt. Der Rückstand wird aus Petroläther umkristallisiert und man erhält 15 g weisse Kristalle. Der Schmelzpunkt beträgt 64-66°C.

Elementaranalyse:

Berechnet für $C_{22}H_{39}O_4$ PS: C, 61,4; H, 9,1.

Gefunden : C, 61,5; H, 9,4.

Beispiel 4: S-(3,5-Di-(tert.-butyl)-4-hydroxyphenyl)-O,O-diphenyl-thiophosphat

Die Herstellung erfolgt nach dem im Beispiel 2 beschriebenen Verfahren. Es werden 14,2 g 3,5-Di-(tert.-butyl)-4-hydroxyphenyldisulfid, 2,6 g Chlor und 26,5 g Triphenylphosphit eingesetzt. Der Rückstand wird aus Acetonitril umkristallisiert und man erhält 26,5 g weisse Kristalle. Der Schmelzpunkt beträgt 130-132°C.

Berechnet für $C_{26}H_{31}O_4$ PS: C, 66,2; H, 6,8; P, 6,6.
Gefunden : C, 66,2; H, 6,8; P, 6,7.

Beispiel 5: S-(3,5-Di-(tert.-butyl)-4-hydroxyphenyl)-O,O-didecyl-thiophosphat

Die Herstellung erfolgt nach dem im Beispiel 2 beschriebenen Verfahren. Es werden 14,2 g 3,5-Di-(tert.-butyl)-4-hydroxyphenyldisulfid, 2,6 g Chlor und 30,5 g Tri-n-decylphosphit eingesetzt. Der Rückstand wird chromatographisch mit Hilfe einer Trennsäure (trockenes Adsorbens) gereinigt. Man erhält 17 g einer leicht braunen viskosen Flüssigkeit.
Elementaranalyse:
Berechnet für $C_{34}H_{63}O_4$ PS: P, 5,2.
Gefunden : P, 5,2.

Beispiel 6: S-(3,5-Di-(tert.-butyl)-4-hydroxyphenyl)-O,O-di-n-octadecyl-thiophosphat

Die Herstellung erfolgt nach dem im Beispiel 2 beschriebenen Verfahren. Es werden 14,2 g 3,5-Di-(tert.-butyl)-4-hydroxyphenyldisulfid, 2,6 g Chlor und 24,6 g Tri-n-octadecylphosphit eingesetzt. Der Rückstand wird aus Heptan umkristallisiert und man erhält 4,1 g weisse Kristalle. Der Schmelzpunkt beträgt 61-63°C.
Elementaranalyse:
Berechnet für $C_{50}H_{95}O_4$ PS: C, 72,9; P, 3,8.
Gefunden : C, 73,2; P, 3,9.

Beispiel 7: Unstabilisiertes Polypropylenpulver (Hercules Profax® 6501) wird mit 0,2 Gew.-% eines Additivs und mit den unten aufgeführten Mengen eines Distearylthiodipropionat-Stabilisators (DSTDP) gemischt. Diese Mischung wird anschliessend bei 182°C 5 Minuten lang auf einem Mischwalzwerk plastifiziert. Dann löst man die stabilisierte Polypropylenfolie vom Walzwerk ab und lässt sie abkühlen. Die Folie wird in Stücke geschnitten, welche mit einer hydraulischen Presse bei

220°C und 12 bar zu 0,64 mm dicken Folien verformt werden. Die 0,64 mm dicken Folien werden in einem rotierenden Ofen bei 150°C gealtert. Als Zersetzungszeitpunkt wird diejenige Anzahl von Stunden gewertet, nach der die Probe die ersten Zerfallserscheinungen zeigt (z.B. Risse oder braune Ecken). Die Ergebnisse sind in Tabelle 1 aufgeführt.

Tabelle 1

| Stabilisator | Konzentration in Gew.-% | Zahl der Stunden bis zur Zersetzung der Proben |
|---|---|---|
| — | — | < 3 |
| Beispiel 4 | 0,2 | 20 |
| Beispiel 5 | 0,2 | 90 |
| Beispiel 6 | 0,2 | 200 |
| DSTDP | 0,3 | 100 |
| Beispiel 4/DSTDP | 0,1/0,3 | 900 |
| Beispiel 6/DSTDP | 0,1/0,3 | 820 |

Beispiel 8: Die stabilisierende Wirkung der erfindungsgemässen Verbindungen in Schmiermitteln wird in einem Oel-Oxidationstest gemäss ASTM D-2272 (Rotary Bomb Oxidation Test) nachgewiesen.

125 mg Stabilisator und 5 ml Wasser werden zu 50 mg Mineralöl (Exxon LO-5084) gegeben, so dass die Stabilisatorkonzentration ca. 0,25 % beträgt. Das Schmiermittel wird zusammen mit einer Kupferspirale in ein Glasgefäss gegeben, welches in eine Stahlbombe gestellt wird, die mit einem Manometer ausgerüstet ist. Die Bombe wird solange mit Sauerstoff gefüllt, bis ein Druck von 6,2 bar erreicht worden ist. Anschliessend wird die Bombe in ein 150°C heisses Oelbad gestellt, in welchem sie axial mit 100 Umdrehungen pro Minute in einem Winkel von 30° zur Horizontalen rotiert. Die Prüfung ist bei einem Druckabfall um 1,7 bar beendet.

Die Zeit in Minuten vom Beginn des Versuchs bis zum Erreichen eines Druckabfalls von 1,7 bar wird in Tabelle 2 wiedergegeben. Wie das Versuchsergebnis zeigt, wird die Oxidationsbeständigkeit des Mineralöls erheblich mit Hilfe des erfindungsgemässen Stabilisators verbessert.

Tabelle 2

| Stabilisator | Minuten bis zum Erreichen eines Druckabfalls von 1,7 bar |
|---|---|
| - | 31 |
| Beispiel 3 | 78 |

Beispiel 9: Dieses Beispiel zeigt die stabilisierende Wirkung der erfindungsgemässen Verbindungen im schlagfesten Polystyrol.

Man stellt eine Lösung von 8 Gew.-% Polybutadien-Kautschuk (Firestone-DIENE 55®) in monomerem Styrol her, indem man beide Komponenten in einer Quetschmühle mischt. 0,1 Gew.-% des zu testenden Stabilisators werden bei diesem Arbeitsgang zu der Lösung gegeben. Schliesslich fügt man noch 500 ppm Zn-Stearat hinzu, um später die polymerisierte Probe leicht aus dem Reaktionsgefäss ablösen zu können. Das Reaktionsgefäss wird in einen Polymerisationsapparat geschraubt, der mit einem Doppelwendelrührer ausgerüstet ist.

Da die meisten IPS Blockpolymerisationen thermisch initiiert sind, wird in der vorliegenden Laboratoriumsversion kein Starter zugesetzt. Die Reaktion wird unter Stickstoff durchgeführt. Der Reaktor wird innerhalb einer halben Stunde auf 121°C erwärmt. Diese Temperatur wird aufrechterhalten, bis zwischen 30 und 35 % des Monomeren umgesetzt sind (Zeitdauer ca. 2,5 Stunden). Die Rührgeschwindigkeit wird so eingestellt, dass Polymerpartikel von 2 bis 4 µm Länge entstehen. Die Reaktionsgefässe werden aus dem Polymerisationsapparat genommen, mit Stickstoff umspült, verschlossen und in ein Wirbelschichtsandbad gestellt, um die Polymerisation zu vervollständigen.

Die Reaktionsgefässe werden im Sandbad folgendermassen erhitzt: Eine Stunde bei 100°C, um die Anfangstemperatur vorzugeben, eine weitere Stunde, um 140°C zu erreichen und anschliessend weitere 2 Stunden, wobei die Temperatur jede Stunde um 10°C erhöht wird, bis schliesslich ein Maximum von 220°C erreicht ist. Nach dem Abkühlen wird das Reaktionsgefäss zerbrochen und das Glas wird entfernt. Ein Polymerblock wiegt im Mittel etwas über 600 g. Der Block wird in einem Vakuumofen 45 Minuten einer Temperatur von 200°C und einem Druck von 1,33 mbar ausgesetzt, um die flüchtigen Bestandteile zu entfernen. Nach dieser Behandlung wird der Block sofort in einer heizbaren hydraulischen Presse bei 205°C zwischen zwei Aluminiumfolien zu einer dicken Platte gepresst (drei Minuten erhitzt, 5 Minuten in einer kalten Presse). Die Platte wird mit einer Bandsäge zerkleinert und die Stücke werden anschliessend granuliert.

Alle Polymermischungen werden bei 205°C extrudiert und dann zerkleinert. Die Pellets werden unter Druck bei 205°C in dehnbare 3,2 mm dicke Streifen verformt. Diese Probestreifen werden bei 150°C in einem Umluftofen gealtert, wobei sie auf Glasplatten, die sich auf rotierenden Trägern befinden, ausgebracht sind. Nach bestimmten Zeitintervallen wird die Dehnbarkeit gemessen bei einer Ziehgeschwindigkeit von 5 mm pro Minute in einem "Instron Tensile Testing Apparatus" (Instron Engineering Corporation, Massachusetts) gemäss ASTM D-638. In Tabelle 3 sind die Ergebnisse dieses Versuchs zusammengestellt.

Tabelle 3

| Stabilisator | Dehnbarkeit der Probe in % bei 150°C | | |
|---|---|---|---|
| | 0 h | 0,5 h | 1 h |
| - | 25 | 13 | 4 |
| Beispiel 6 | 62 | 36 | 10 |

Patentansprüche

1. Verbindungen der Formel I

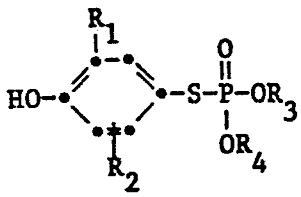

(I),

worin $R_1$ und $R_2$ unabhängig voneinander $C_1$-$C_{12}$ Alkyl, $C_5$-$C_6$ Cycloalkyl, unsubstituiertes oder durch $C_1$-$C_{12}$ Alkyl substituiertes Phenyl, unsubstituiertes oder durch $C_1$-$C_{12}$ Alkyl substituiertes $C_7$-$C_9$ Aralkyl sind und $R_1$ zusätzlich Wasserstoff bedeutet, $R_3$ und $R_4$ unabhängig voneinander Wasserstoff, $C_1$-$C_{20}$ Alkyl, $C_5$-$C_6$ Cycloalkyl, unsubstituiertes oder durch $C_1$-$C_{12}$ Alkyl substituiertes Phenyl bedeuten.

2. Verbindungen der Formel I, gemäss Anspruch 1, worin $R_1$ $C_1$-$C_{12}$-Alkyl, $C_5$-$C_6$-Cycloalkyl, unsubstituiertes oder durch $C_1$-$C_{12}$ Alkyl substituiertes Phenyl, unsubstituiertes oder durch $C_1$-$C_{12}$ Alkyl substituiertes $C_7$-$C_9$ Aralkyl bedeutet.

3. Verbindungen der Formel I, gemäss Anspruch 1, in denen sich $R_1$ und $R_2$ in ortho-Stellung zur Hydroxylgruppe befinden.

4. Verbindungen der Formel I, gemäss Anspruch 3, worin $R_1$ und $R_2$ $C_1$-$C_8$ Alkyl sind.

5. Verbindungen der Formel I, gemäss Anspruch 3, worin $R_1$ und $R_2$ tert.-Butyl sind.

6. Verbindungen der Formel I, gemäss Anspruch 3, worin $R_1$ tert.-Butyl ist, $R_2$ Methyl oder tert.-Butyl ist und $R_3$ und $R_4$ Decyl, Dodecyl oder Phenyl bedeuten.

7. Verbindungen der Formel I, gemäss Anspruch 3, worin $R_1$ tert.-Butyl ist und $R_2$ Methyl ist.

8. Verbindungen
S-(3,5-Di-(tert.-butyl)-4-hydroxyphenyl)-O,O-diethyl-thiophosphat,
S-(3,5-Di-(tert.-butyl)-4-hydroxyphenyl)-O,O-dibutyl-thiophosphat,
S-(3,5-Di-(tert.-butyl)-4-hydroxyphenyl)-O,O-diphenyl-thiophosphat,
S-(3,5-Di-(tert.-butyl)-4-hydroxyphenyl)-O,O-didecyl-thiophosphat und
S-(3,5-Di-(tert.-butyl)-4-hydroxyphenyl)-O,O-di-n-octadecyl-thiophosphat gemäss Anspruch 1.

9. Stoffzusammensetzung enthaltend organisches Material und mindestens eine Verbindung der Formel (I) gemäss Anspruch 1, worin $R_2$ zusätzlich Wasserstoff bedeutet.

10. Stoffzusammensetzung gemäss Anspruch 9, worin $R_2$ $C_1$-$C_{12}$ Alkyl, $C_5$-$C_6$ Cycloalkyl, unsubstituiertes oder durch $C_1$-$C_{12}$ Alkyl substituiertes Phenyl, unsubstituiertes oder durch $C_1$-$C_{12}$ Alkyl substituiertes $C_7$-$C_9$ Aralkyl bedeutet.

11. Stoffzusammensetzung gemäss Anspruch 9, wobei unter dem organischen Material ein synthetisches Polymer zu verstehen ist.

FO 7.3/SR/gs*

Europäisches Patentamt

# EUROPÄISCHER RECHERCHENBERICHT

0176480
Nummer der Anmeldung

EP 85 81 0417

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 683 054 (J.C. WOLLENSAK) * Insgesamt; Spalte 3, Zeilen 5,6,39,40 * --- | 1-11 | C 07 F 9/18<br>C 08 K 5/51<br>C 09 K 15/32 |
| X | LIEBIGS ANNALEN DER CHEMIE, Band 677, 1964, Seiten 59-67; H.B. STEGMANN et al.: "Untersuchungen der Mesomerie in schwefelhaltigen Gruppierungen von Aroxylen durch Elektronenresonanz" * Seiten 59,60; Seite 66, letzter Absatz * ----- | 1-6,8 | |
| | | | RECHERCHIERTE SACHGEBIETE (Int Cl 4) |
| | | | C 07 F 9/00 |

Der vorliegende Recherchenbericht wurde für alle Patentansprüche erstellt

| Recherchenort | Abschlußdatum der Recherche | Prüfer |
|---|---|---|
| DEN HAAG | 17-12-1985 | BESLIER L.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument